# EUROPEAN PATENT APPLICATION

(11) **EP 2 445 073 A1**
(43) Date of publication of application: **25.04.2012**
(21) Application number: 11183733.2
(22) Date of filing: 03.10.2011
(51) Int. Cl.: H02G 15/013

(54) **Electrical connection device using a cable gland and method of manufacturing thereof**

(30) Priority: 20.10.2010 IT MI20101968
(71) Applicant: Aldabra S.r.l., 20049 Concorezzo (MI) (IT)
(72) Inventor: GADDA, Walter, 20049 Concorezzo (MI) (IT)
(74) Representative: Postiglione, Ferruccio

(57) **Abstract**

An electrical connection device (100) is described comprising: a cable gland body (1) defining an inner housing (6) and at least an electric cable (2) arranged in said housing and comprising an electrical wire (4) and a coating insulating sheath (5). The device is characterized in that the electric cable (2) has an exposed length (11) of the electric wire (4) without said sheath and internally arranged in the housing (6). Furthermore, the connection device comprises an impervious-type and electrically insulating filling material (12) of the housing (6), which encloses said at least one electric cable and the exposed length by interposing itself between the electric wire and an inner face of the cable gland.

## Description

### Field of the invention

The present invention refers to the field of devices for connecting electrical cables to outdoor apparatuses. Particularly, the present invention refers to cable gland devices.

### Prior art

The cable glands are used for connecting electrical cables to equipments in order to enable to prevent dust or water from entering into the apparatus itself. Such devices, besides having a high protection degree against the penetration of dust and liquids, are used for preventing a possible pull acting on the cable from detaching the cable itself from the terminals which is connected to.

A type of a conventional cable gland comprises a housing receiving compression seals acting on the cable received in the housing.

It is to be observed that, for example, with reference to the outdoor use, it is highly felt the need of an efficient tight seal.

### Summary of the invention

The Applicant has observed that the conventional cable glands have still limits with reference to their tightness.

Therefore, an object of the present invention is to make available a connection device offering a satisfactory performance with reference to the tightness of the connection of electrical cables to an outdoor electrical apparatus.

This and other objects are met by a connection device as described by claim 1. The dependent claims define possible and advantageous embodiments of the invention.

It is also an object of the invention a method of manufacturing an electrical connection device as described by claim 17 and by a particular embodiment thereof defined by claim 18.

### Brief description of the drawings

For better understanding the invention and appreciating its advantages, in the following some of its exemplifying non-limiting embodiments will be described with reference to the attached figures, wherein:
Figure 1 shows a side view of a particular embodiment of an electrical connection device using a cable gland body and an electrical cable comprising several conductors;
Figure 2 shows a longitudinal cross-section of said connection device and shows a plan view of an insulating device and electrical wires included in the cable gland body;
Figure 3 shows a longitudinal cross-section and a transversal cross-section of a particular of said electrical cable of the connection device according to a possible embodiment;
Figure 4 shows a longitudinal cross-section of a particular of said electrical cable of the connection device according to a further possible embodiment;
Figure 5 shows a longitudinal cross-section and a transversal cross-section of a particular of said electrical cable of the connection device according to a further possible embodiment;
Figure 6 shows a longitudinal cross-section of a particular of said electrical cable of the connection device according to a further possible embodiment;
Figure 7 shows a longitudinal cross-section of a particular of said electrical cable of the connection device according to a further possible embodiment.

### Detailed description

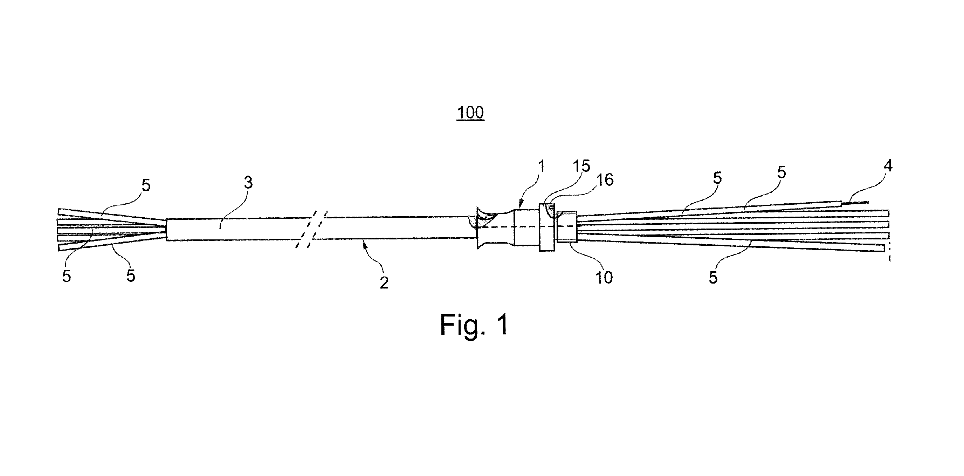

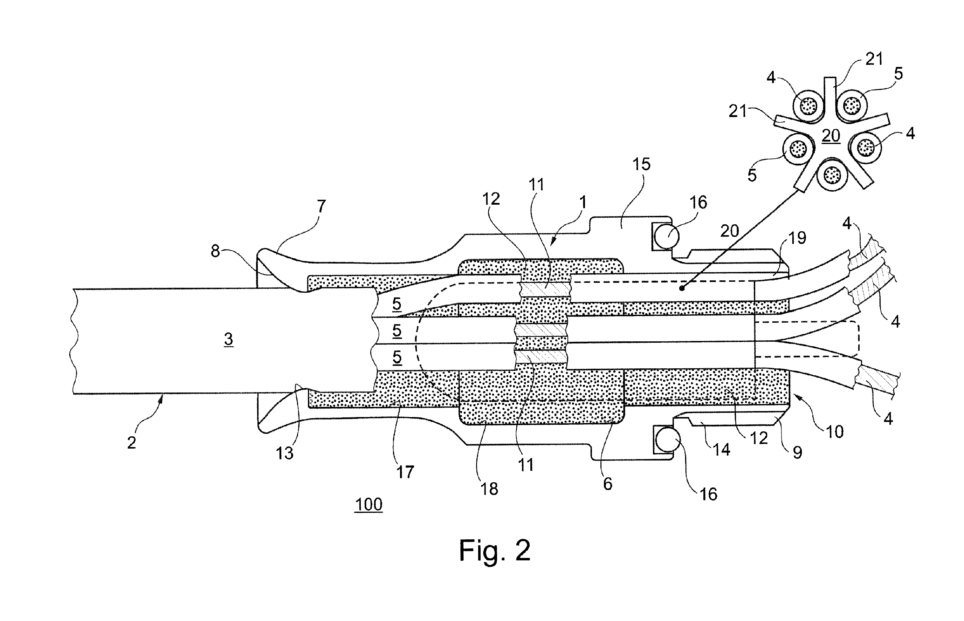

Figures 1 and 2 generally show an electrical connection device 100 comprising a cable gland body 1 and an electrical cable 2 passing through it. The electrical cable 2 comprises a protection insulating sheath 3 (for example made of PVC) and one or more inner electrical cores or wires 4, insulated by corresponding insulating sheaths 5. For example, the insulating sheaths 5 can be made of different colors.

According to the particular example shown in Figures 1 and 2, the electrical cable 2 is a multipolar cable comprising five electrical wires 4 which, in turn, can be formed by several suitably braided metal threads, such as, for example, copper strands. However, the teachings of the invention can be applied to any type of electrical cable such as, for example, unipolar, bipolar, tripolar cables, etcetera.

The cable gland body 1 is substantially tubular and defines an inner housing 6 receiving the electrical cable 2. More particularly, the cable gland body 1 is provided with a first end 7, provided with a first mouth 8, and a second end 9, provided with a second mouth 10, the inner housing 6 extends between the mouths.

Referring again to cable 2, it is to be observed that it extends from the first mouth 8, passes through the inner housing 6 and exits from the second mouth 10. Particularly, in the inner housing 6, the electrical cable 2 for at least a length, does not have the protection sheath 3 which has been suitably removed.

Moreover, in the inner housing 6, each electrical wire 4 of the electrical cable 2 has an exposed length 11, in other words it has a segment whose strands are bare (for their entire circumference), in other words they are not covered by the corresponding insulating sheath 5, which has been removed, for example, by peeling.

Further, the inner housing 6 comprises an impervious-type and electrically insulating filling material 12 which encloses the electrical wires 4 and, particularly, encloses the exposed length 11, interposing itself between the latter and an inner face of the housing 6 itself.

The filling material 12 is preferably an epoxy resin, but it can also be made of another material having similar requirements such as, for example, other polymeric resins or silicone resins. The filling material 12, besides having tightness and sealing properties, enables to suitably block the electrical wires 4 inside the cable gland body 1.

Referring back to the cable gland body 1, it is to be observed that the first mouth 8 is provided with anchoring means 13 adapted to act on the outer protection sheath 3 of the electrical cable 2, inserted in such first mouth, for preventing its extraction from the inner housing 6. According to a particular embodiment, the anchoring means are formed by a circular edge 13 projecting towards the housing 6 in order to progressively reduce the diameter of the first mouth 8. Anyway, further anchoring means alternative or in addition to those shown in the figure can be used, such as for example, projecting teeth or fins inflecting inwardly the cable gland body.

Further, the second end 9 of the cable gland body 1 is advantageously provided with means 14 for fixing it to an outdoor electrical apparatus, such as for example a lamp or a shunt box (not shown). According to a particular embodiment, the cable gland body 1 is adapted for a male-type bayonet fitting and said fixing means comprise a screwing thread 14 formed on the outer surface of the second end 9. Such thread is adapted to enable to screw the cable gland body to a counter-thread which the outdoor electrical apparatus is provided with. Alternatively, the outdoor electrical apparatus can be fixed for example by a geometrical coupling or by an interference fit.

Referring to the particular embodiment shown in the figures, the cable gland body 1 is provided, outwardly and rearwardly with respect to the second end 10, with a gripping body 15. According to a possible embodiment, the gripping body 15 comprises a portion having the shape of a nut, for example an hexagonal nut, so that it can be easily driven. Further, the gripping body 15 is advantageously provided with a seal 16, preferably of the 0-ring type, ensuring the necessary tightness when the cable gland body 1 is screwed to the outdoor electrical apparatus.

The inner housing 6 receiving the electrical cable 2 and the filling material 12 is shaped in order to have undercuts which prevent the filling material 12 to be extracted out. Particularly, the inner housing 6 comprises a first tubular conduit 17 radiused to a central hollow area 18 having a diameter greater than the one of the first tubular conduit 17, in turn radiused to a second tubular conduit 19, having a diameter smaller than the one of the central hollow area 18. The particular shape of the central hollow area 18, having a diameter greater than the one of the tubular conduits 17 and 19, effectively prevents the electrical cable 2, integral with the filling material 12 of the inner housing 6, to be extracted.

The cable gland body 1 can be made of different materials such as, for example: metals (particularly, however not limitatively, brass or stainless steel) or plastic.

According to a preferred embodiment, the connection device 100 is also provided with a device 20 insulating the electrical wires 4, having at least one wall 21 adapted to separate two adjacent electrical wires 4 and arranged in proximity with the corresponding exposed lengths 11, in the inner housing 6.

Particularly, as shown in Figure 2, the insulating device 20 comprises a longitudinal axis from which a plurality of partition walls 21 radially extend. This insulating device (which can be made, for example, of plastic, epoxy resin or silicone resin) prevents a reciprocal contact among the exposed lengths 11 and makes stable the device 100.

With reference to the method of manufacturing and assembling the device 100, first of all the outer protective sheath 3 is peeled away in order to expose the electrical wires 4 coated by the corresponding insulating sheath 5. Then, a portion of the insulating sheath 5 of all the electrical wires 4 is removed, for example by peeling.

The electrical cable 2 is then inserted in the cable gland body 1 so that: the circular body 13 acts against the outer protective sheath 3, the exposed lengths 11 are inside the central hollow area 18 and the other lengths of the electrical wires 4 coated by the sheaths 5 project from the second mouth 10. Before or after having inserted the electrical cable 2 in the cable gland body 1, it is possible to assemble the insulating device 20.

Then, it is performed a step of applicating the filling material 12. By considering, for example, the epoxy resin, this resin is poured in a fluid/softened state in the inner housing 6 so that it can completely fill the first tubular conduit 17, central hollow area 18, and the second tubular conduit 19, by penetrating the gaps. Then, the resin is cross-linked in order to take a solid state, that is a stiff texture.

Except for possible trimming operations (for example, deburring step), the connection device 100, assembled in this way, is therefore ready for being applied to the outdoor electrical apparatus.

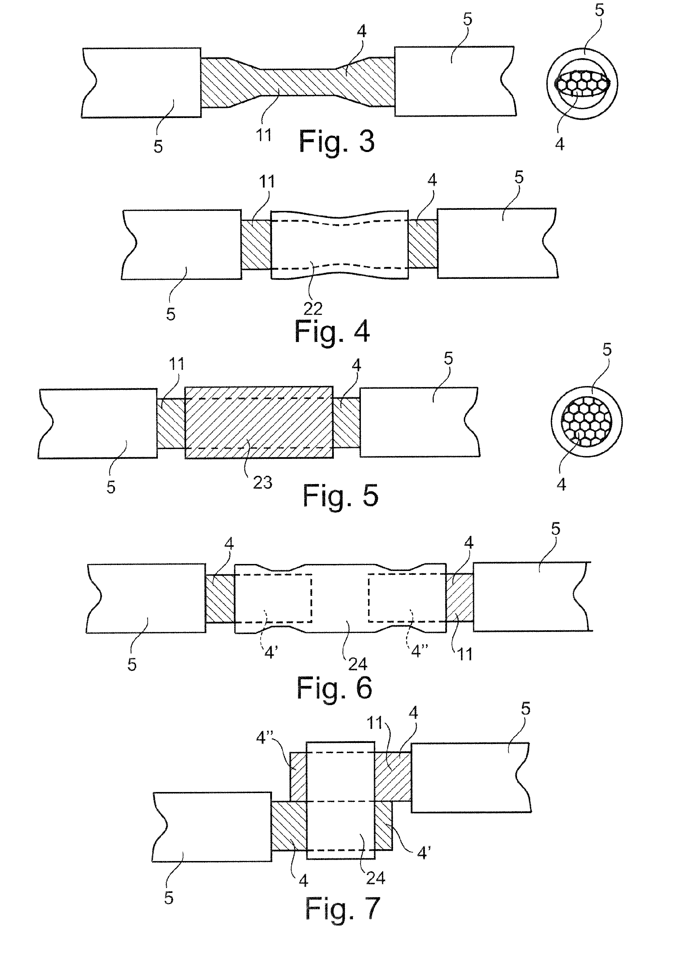

Possible alternative embodiments of the electrical cable 2, particularly of the electrical cable/s 4, will be described with reference to Figures 3-7.

According to a first possible embodiment shown in Figure 3, the electrical wires 4 are locally pressed at their corresponding exposed length 11, which therefore has a reduced section portion. Such pressing can, for example, be obtained by a pair of shaped punches. With reference in particular to the case wherein the electrical wires 4 consist of copper strands, such approach avoids or anyway substantially reduces the probability of water going up through the strands themselves.

According to a second possible embodiment shown in Figure 4, the localized pressing of the wires 4 is carried out by pressing and deforming a tubular pressing body 22 arranged on the wire 4 itself at the corresponding exposed length 11. In this position, the pressing body 22 is locally deformed, for example it is crimped, so that to correspondingly pressing the electrical wire 4. Also in this case, the result consists of preventing or anyway limiting the water passage through the wires 4 strands. The pressing body 22 is preferably made of a conductive material, for example metal.

According to a third possible embodiment shown in Figure 5, it is provided a tubular coating film 23 arranged on the electrical wire 4 at its exposed length 11. Such coating film 23 is obtained by at least partially wetting the exposed length 11 of the electrical wire 4 with melted metal, preferably tin, which is then allowed to solidify. The melted metal fills the gaps among the single copper strands of the wire. Also in this case, the technical result consists of limiting the water passage through the strands of the electrical wire 4.

According to the embodiments described until now, it is kept the continuity of the electrical wires 4 at the exposed lengths 11. Alternatively, the electrical wires 4, inside the hollow area 18, can be interrupted (for example cut) so that each of them forms two opposed heads 4' and 4". The electrical connection between these opposed heads 4' and 4" is ensured by a connection element adapted also to keep their mechanical connection.

According to a possible embodiment shown in Figure 6, the electrical wire 4 is interrupted and the heads 4' and 4" are kept at a distance with a substantial alignment. Such relative position of the two heads 4' and 4" is ensured by a connection element 24 made of a material capable of conducting electricity, for example, a metal material. The connection element 24 comprises a tubular body at the ends of which the heads 4' and 4" of the electrical wire 4 are inserted. The heads are blocked by deformation of such ends of the connection element 24, for example by crimping, so that the ends can be deformed by pressing the heads 4' and 4" of the electrical wire 4. The connection element 24, devoid of the protection sheaths, replaces the metal strands of the wire in the length in which it is interrupted. So, such arrangement prevents the water from going up through the electrical wire 4 because it is interrupted, and ensures at the same time the electrical conduction.

According to a further possible embodiment shown in Figure 7, the opposed heads 4' and 4" of the electrical wire 4 are kept in contact one to the other in misaligned positions. In this way it is ensured the electrical continuity by limiting the mechanical continuity and therefore also the possibility of the water going up through the strands. Also in this case, for maintaining in position the heads 4' and 4" of the electrical wire 4, it is possible to use a connection element 24, preferably made of a conductive material, for example metal, comprising a tubular body in which the heads 4' and 4" of the electrical wire 4 are inserted and blocked by pressure deformation, for example by crimping.

It is to be noted that the invention shows substantial advantages with respect to the tightness because it enables to obtain a high degree of protection against water.

The Applicant has observed that the presence of the exposed lengths 11 (devoid of the insulating sheath) inside the cable gland body 1 prevent the passage due to the capillarity of water which can occur along the electrical wires 4 coated by the insulating sheath. The same advantageous result occurs for other embodiments using conductive elements (devoid of the sheath) connecting the heads of interrupted metal strands.

Moreover, the use of the filling material 12 in the inner housing 6 substantially eliminates the gaps, avoiding the water passage through the gaps between the cable 2 and the inner wall of the housing 6 itself.

Another advantageous aspect with reference to the tightness is associated to the presence of the seal 16 avoiding the entrance of water from the outward to the electrical apparatus which the connection device 100 is connected to.

The tightness degree obtainable by the invention is suitable not just for outdoor applications, but also for submarine applications, such as for example for lighting swimming pools or fountains or for environments having a high degree of humidity, such as a Turkish bath.

The person skilled in the art, in order to meet specific contingent needs, can add several additions, modifications, or substitutions of the elements with other operatively equivalent to the above described embodiments of the connection device and method of manufacturing the same, without however falling out of the scope of the attached claims.

Each of the characteristics described as belonging to an embodiment, can be implemented independently from the other described embodiments.

## Claims

1. An electrical connection device (100) comprising:
a cable gland body (1) defining an inner housing (6);
at least an electric cable (2) arranged in said housing and comprising an electrical wire (4) and a coating insulating sheath (5);
**characterized in that** the electric cable (2) has an exposed length (11) of the electric wire (4) without said sheath and internally arranged in the housing (6),
and **in that** it comprises an impervious-type and electrically insulating filling material (12) of the housing (6), which encloses said at least one electric cable and the exposed length by interposing itself between the electric wire and an inner face of the cable gland.

2. The device (100) according to claim 1, wherein the cable gland body (1) has a first end (7, 8) for inserting said at least one electric cable (2) and a second end (9, 10) for the electric wire provided with fastening means (14) to an external electrical apparatus.

3. The device (100) according to at least one of the previous claims, comprising:
anchoring means (13) associated to a mouth (9) of the first end (7) suitable for acting on the electric cable to prevent it from being extracted from housing (6);
an annular seal (16) associated to the second end (10) for a tight seal of the attachment to the external electric apparatus.

4. The device (100) according to at least one of the previous claims, wherein said cable gland body (1) is substantially tubular and it is made of at least one of the materials comprised in the group consisting of: metal material, brass, stainless steel, plastics.

5. The device (100) according to at least one of the previous claims, wherein said filling material (12) forms a rigid body.

6. The device (100) according to at least one of the previous claims, wherein said housing (6) defines at least an undercut (18) for the filling material abutment.

7. The device (100) according to at least one of the previous claims, wherein said electric cable (2) comprises a plurality of electric wires (4) each being provided with a relative sheath (5) and arranged within a common protective cover (3); each electric wire of the plurality being provided with a respective exposed length (11) contacting said filling material.

8. The device (100) according to claim 7, further comprising a device (20) for electrically insulating the wires (4) of the plurality having at least a wall adapted for spacing apart the adjacent electric wires and arranged in the vicinity of the relative exposed lengths (11).

9. The device (100) according to at least one of claims 1 to 8, wherein said electric wire (4) is locally pressed at the respective exposed length (11).

10. The device (100) according to at least one of claims 1 to 9, wherein said electric wire (4) comprises a tubular pressing body (22) arranged on the electric wire (4) itself at the respective exposed length (11), said pressing body (22) being locally deformed such to press said exposed length (11) of the electric wire (4).

11. The device (100) according to at least one of claims 1 to 8, wherein said electric wire (4) comprises a tubular coating film (23) arranged on the electric wire (4) itself at the respective exposed length (11), said coating film (23) being made from a melted metal, preferably tin, located at said exposed length (11) of the electric wire (4) and solidified afterwards.

12. The device (100) according to at least one of claims 1 to 8, wherein said electric wire (4) is broken forming two heads (4', 4") in said exposed length (11), the exposed length (11) comprising a linking element (24) of the two ends (4', 4").

13. The device according to claim 12, wherein said opposed heads (4', 4") of the electric wire (4) are kept spaced apart substantially aligned, said linking element (24) comprising a tubular body made of an electrically conductive material at whose ends said two heads (4', 4") of the electric wire (14) are inserted and blocked by pressing the linking element (24).

14. The device according to claim 12, wherein said opposed heads (4', 4") of the electric wire (4) are kept in substantially offset positions contacting each other, said linking element (24) comprising a tubular body, wherein said two heads (4', 4") of the electric wire (14) are inserted and blocked by pressing the linking element (24).

15. A method for manufacturing an electric connecting device comprising the steps of:
providing a cable gland body (1) defining an inner housing (6);
providing at least an electric cable (2) comprising at least an electric wire (4) and an insulating sheath (5) for covering the electric wire (4);
processing the electric wire (4) such as to obtain an exposed length (11) without a sheath;
arranging the electric wire so that the exposed length is within the housing (6),
inserting an impervious-type and electrically insulating filling material (12) inside the housing such that it encloses said at least one electric cable and the exposed length, interposing itself between the electric wire and an inner face of the cable gland body.
